# EUROPÄISCHE PATENTSCHRIFT

(11) **EP 0 811 775 B1**
(45) Veröffentlichungstag und Bekanntmachung des Hinweises auf die Patenterteilung: **10.05.2000**
(21) Anmeldenummer: 97810069.1
(22) Anmeldetag: 06.02.1997
(51) Int. Cl.: F16B 13/00

(54) **Hinterschnittanker**
Self-undercutting anchor
Cheville d'ancrage autocoupante

(30) Priorität: 05.06.1996 DE 19622544
(43) Veröffentlichungstag der Anmeldung: 10.12.1997
(73) Patentinhaber: HILTI Aktiengesellschaft, 9494 Schaan (LI)
(72) Erfinder: Beck, Hermann, 6807 Feldkirch-Tisis (AT); Hartmann, Markus, A-6820 Frastanz (AT); Gassner, Helmut, 9497 Triesenberg (LI); Kossian, Susanne, 6800 Feldkirch (AT); Kunz, Jakob, 9470 Buchs (CH); Mattner, Richard, 6850 Dornbin (AT); Kussmaul, Rainer, 6712 Thüringen (AT); Wisser, Erich, 6900 Bregenz (AT)
(74) Vertreter: Wildi, Roland

(56) Entgegenhaltungen:
- EP-A- 0 104 723
- DE-A- 3 640 929
- US-A- 4 702 654

## Beschreibung

Die Erfindung betrifft einen Hinterschnittanker, insbesondere einen Hinterschnittanker, der während des Setzvorgangs in der Aufnahmebohrung im Untergrund eine Hinterschneidung erzeugt, gemäss dem Oberbegriff des Patentanspruchs 1.

In der Befestigungstechnik ist es vielfach erforderlich, weitgehend spreizdruckfreie Befestigungen zu erstellen. Insbesondere bei geringen Rand- und Achsabständen besteht bei Verankerungen mit konventionellen Spreizdübeln die Gefahr von Rissen oder sogar Abplatzern im Untergrund. Zu diesem Zweck sind Verankerungssysteme bekannt, bei denen ein spezielles Befestigungselement formschlüssig in einer Aufnahmebohrung verankert wird. Zu diesem Zweck wird eine zylindrische Aufnahmebohrung in einer definierten Tiefe mit einer Hinterschneidung versehen. Das in die vorbereitete Aufnahmebohrung einsetzbare Befestigungselement umfasst eine Ankerstange mit einem angeformten Konus, die durch die axiale Durchgangsbohrung einer Hülse geführt ist. Die Hülse ist mit ausstellbaren Segmenten ausgestattet, die durch die Relatiwerschiebung der Hülse und der Ankerstange in die Hinterschneidung ausschwenkbar sind. Für die Erstellung der Hinterschneidung in der zylindrischen Aufnahmebohrung ist ein spezielles Werkzeug erforderlich. Die mit dem Hinterschnittwerkzeug hergestellte Hinterschneidung ist oftmals nicht optimal auf den einzusetzenden Hinterschnittanker abgestimmt. Der daraus resultierende Formschluss der Ausstellsegmente der Hülse des Hinterschnittankers in der Hinterschneidung ist daher oft nicht optimal und kann verbessert werden.

Um diesem Nachteil abzuhelfen, ist beispielsweise in der US-A-4,702,654 vorgeschlagen, die Hinterschneidung direkt mit dem einzusetzenden Hinterschnittanker zu erstellen. Zu diesem Zweck sind die ausstellbaren Spreizlappen der Hülse mit Schneiden versehen. An ihrem den Spreizlappen gegenüberliegenden rückwärtigen Ende sind an der Hülse Aussparungen vorgesehen, in die Mitnehmerklauen eines Setzwerkzeugs eingreifen können, welches über die Ankerstange gestülpt wird. Mit Hilfe des Setzwerkzeugs kann die Hülse in Rotation versetzt werden. Während ihrer Rotation wird der mit den Spreizlappen ausgestattete Bereich der Hülse gegen und über den sich am Bohrlochgrund abstützenden Konus der Ankerstange geschoben. Dadurch werden die ausstellbaren Spreizlappen gegen die Bohrlochwandung gepresst. Durch die Rotation erzeugen die Schneiden an den Spreizlappen schabend eine Hinterschneidung. Die Form der derart erzeugten Hinterschneidung ist näherungsweise auf die Form der Spreizlappen abgestimmt. Die zylindrische Aufnahmebohrung muss bis in eine genau vorbestimmte Tiefe gebohrt werden, da das konusförmige Kopfteil am Vorderende der Ankerstange am Bohrlochgrund aufstehen muss. Zwischen der ruhenden Ankerstange und der rotierenden Hülse kann es beim Setzvorgang zu einer erheblichen Reibung kommen, was den Setzvorgang erschwert. Der Winkel, den bei diesem bekannten Hinterschnittanker die ausgestellten Spreizlappen mit der Achse der Ankerstange einschliessen, ist relativ klein und beträgt nur etwa 23°. Bei Belastung des gesetzten Hinterschnittankers tritt daher immer noch eine relativ grosse horizontale Kraftkomponente auf, die zu einer übermässigen Belastung des Untergrunds durch Spreizdruck führen kann. Für die Herstellung der Hinterschneidung ist ein spezielles Setzwerkzeug erforderlich. Am gesetzten Hinterschnittanker ist nicht ersichtlich, ob die Hinterschneidung ausreichend gross erstellt wurde und ob die Spreizlappen ausreichend weit in die Hinterschneidung ausgestellt worden sind.

Aufgabe der vorliegenden Erfindung ist es daher, einen Hinterschnittanker zu schaffen, der einfach und zuverlässig einsetzbar ist. Der Hinterschnittanker soll sich beim Setzvorgang selbsttätig den Hinterschnitt erzeugen. Zusätzliche Hilfsmittel sollen weitgehend vermieden werden können. Der Hinterschnittanker soll unabhängig von der Tiefe der vorgebohrten zylindrischen Aufnahembohrung einsetzbar und verankerbar sein. Es sollen Hinterschneidungen mit grösseren Hinterschneidungswinkeln herstellbar sein, die ein Ausstellen der Spreizlappen in grösseren Winkeln erlauben. Zudem soll es möglich sein, den Hinterschnittanker dahingehend auszustatten, dass auch am gesetzten Anker unmittelbar ersichtlich ist, ob ein ausreichend grosser Hinterschnitt bzw. Formschluss der Spreizlappen erzielt worden ist.

Die Lösung dieser Aufgaben besteht in einem Hinterschnittanker, der die im Patentanspruch 1 angeführten Merkmale aufweist. Der erfindungsgemässe Hinterschnittanker besitzt eine Ankerstange, die an ihrem in Setzrichtung vorderen Ende ein sich zumindest bereichsweise in Setzrichtung konisch erweiterndes Kopfteil aufweist und durch die axiale Durchgangsbohrung einer gegenüber der Ankerstange axial verschiebbaren Spreizhülse geführt ist. Die Spreizhülse ist mit einer Anzahl sich von ihrem vorderen Ende erstreckenden axialen Längsschlitzen versehen, durch die wenigstens zwei einander gegenüberliegende, ausstellbare Spreizlappen gebildet sind, die an ihren freien Vorderenden Schneiden aufweisen. Der Hinterschnittanker stützt sich gegenüber der Oberfläche des Untergrunds ab und weist Mittel zur Drehmitnahme auf, mit denen eine während des Setzvorgangs der Ankerstange erteilte axiale Rotation auf die Spreizhülse übertragbar ist.

Der erfindungsgemässe Hinterschnittanker stützt sich gegenüber der Oberfläche des Untergrunds ab, in dem die zylindrische Aufnahmebohrung erstellt ist. Das konisch erweiterte Kopfteil muss sich nicht mehr am Bohrlochgrund abstützen, um die Hinterschneidung erstellen zu können. Es muss nur eine Mindestbohrtiefe der zylindrischen Aufnahmebohrung gewährleistet sein, um den Hinterschnittanker vollständig einsetzen zu können. Bei dem erfindungsgemässen Hinterschnittanker ist für den Setzvorgang die Ankerstange drehbar, und sind Mittel zur Drehmitnahme vorgesehen, um die Drehbewegung der Ankerstange auf die Spreizhülse zu übertragen. Die Ankerstange und die Spreizhülse werden synchron gedreht. Dadurch tritt zwischen der Ankerstange und der Spreizhülse keine durch die relative Drehbewegung verursachte Reibung auf, welche den Setzvorgang erschwert. Dadurch, dass die Ankerstange und die Spreizhülse drehgekoppelt sind, ist die Voraussetzung geschaffen, den konischen Kopfbereich am vorderen Ende der Ankerstange derart auszubilden, dass er die Spreizlappen während des Ausstellens abstützt. Dadurch können die Spreizlappen in einem grösseren Ausmass ausgestellt werden und kann eine breitere Hinterschneidung mit grösserem Hinterschneidungswinkel hergestellt werden. Dadurch wird der Winkel, den die ausgestellten Spreizlappen mit der Achse der Ankerstange einschliessen, vergrössert. Bei der axialen Zugbelastung des gesetzten Hinterschnittankers kann dadurch die für den Spreizdruck veranwortliche horizontale Kraftkomponente klein gehalten werden.

In einer zweckmässigen Variante der Erfindung sind die Mittel zur Drehmitnahme radiale Drehmitnahmestege, die im Verbindungsbereich des Kopfteils mit der Ankerstange vom Kopfteil abragen und drehschlüssig in die axialen Längsschlitze der Spreizhülse eingreifen. Die Stege greifen bereits am Anfang des Setzvorgangs in die Längsschlitze der Spreizhülse ein und übertragen die Drehbewegung der Ankerstange auf die Spreizhülse. Die Spreizlappen werden umso weiter ausgestellt, je weiter die Spreizhülse auf die konischen Abschnitte des Kopfteils aufgeschoben wird. Dabei dringen die Drehmitnahmestege axial immer weiter in die Längsschlitze ein. Die Übertragungsflächen zwischen den Drehmitnahmestegen und der Spreizhülse vergrössern sich mit fortschreitendem Aufspreizen der Spreizlappen. Dadurch kommt es auch bei steigender Reibungskraft zwischen den Spreizlappen und der Bohrlochwandung zu keinem Versagen der Drehmitnahmestege.

Indem die Kontur der Axialprojektion der Drehmitnahmestege im wesentlichen der Kontur der Axialprojektion der Längsschlitze entspricht, können die Drehmitnahmestege bei der axialen Relatiwerschiebung zwischen der Ankerstange und der Spreizhülse ohne grösseren Widerstand leicht in die Längsschlitze hineingleiten.

Für die Übertragung der Drehbewegung der Ankerstange auf die Spreizhülse erweist es sich von Vorteil, wenn die Drehmitnahmestege vom Umfang der Ankerstange zum Umfang des Kopfteils keilförmig verbreitert ausgebildet sind. Dadurch bleiben die Drehmitnahmestege auch bei den sich erweiternden Längsschlitzen in weitgehendem Flächenkontakt mit den Seitenflächen der Spreizlappen, und die Spreizlappen sind zusätzlich zu der axialen Unterstützung auch seitlich geführt. Auf diese Weise kann eine radiale Verformung der Spreizlappen durch die bei der schabenden Herstellung der Hinterschneidung auftretenden Kräfte vermieden werden.

Eine besonders gute Abstützung der Spreizlappen ergibt sich, wenn die Bereiche des Kopfteils zwischen zwei Drehmitnahmestegen Zylinderflächenabschnitte sind, auf welche die Spreizhülse unter Aufspreizen ihrer Spreizlappen aufschiebbar ist.

In einer vorteilhaften Variante der Erfindung bestehen die Mittel zur Drehmitnahme in einem Drehschluss der Ankerstange und der Spreizhülse, wobei die Ankerstange in ihrem vorderen Bereich einen von der Kreisform abweichenden Querschnitt aufweist und die Durchgangsbohrung der Spreizhülse auf den Querschnitt der Ankerstange kalibriert ist. Auf diese Weise bestehen wenigstens über einen Teilbereich der Längserstreckung der Spreizhülse relativ grosse Drehmitnahmeflächen, die bereits zu Beginn des Setzvorgangs bzw. des Hinterschneidungsvorgangs in vollem Umfang zur Verfügung stehen.

Zweckmässigerweise besitzt die Ankerstange die Form eines n-Ecks und weist das Kopfteil eine Anzahl von Keilflächen auf, die in Setzrichtung von der Achse der Ankerstange weg geneigt verlaufen, wobei die Anzahl der Keilflächen der Anzahl der Spreizlappen der Spreizhülse entspricht. Die Keilflächen des Kopfteils stützen die Spreizlappen ab und nehmen einen grossen Teil der beim Erstellen der Hinterschneidung auftretenden Kräfte auf. Dadurch wird die Gefahr eines Abscherens der Spreizlappen deutlich reduziert. Durch die weitgehend flächige Anlage der Spreizlappen an den Keilflächen können die Spreizlappen in grösserem Umfang ausgestellt werden, um eine tiefere Hinterschneidung mit einem grösseren Hinterschneidungswinkel herzustellen.

In einer vorteilhaften Variante der Erfindung stützt sich der Hinterschnittanker an der Oberfläche des Untergrunds über eine im Anschluss an die Spreizhülse auf die Ankerstange aufgeschobene Schubhülse ab. Die Schubhülse erstreckt sich zum rückwärtigen Ende der Ankerstange und ist axial gegenüber der Ankerstange verschiebbar. Ihr vorderes Ende ist in loser Anlage mit dem rückwärtigen Ende der Spreizhülse. An ihrem rückwärtigen Ende weist sie einen tellerfederartig gewölbten Flansch auf, dessen Wölbung derart verläuft, dass die konkave Seite des Flansches dem vorderen Ende der Schubhülse zugewandt ist. Die gegenüberliegende Seite des Flansches ist n Anlage mit einer Anpressmutter, die auf ein, vorzugsweise rechtsdrehendes, Aussengewinde am rückwärtigen Ende der Ankerstange aufschraubbar ist. Der tellerfederartige Flansch am rückwärtigen Ende der Schubhülse stellt eine Sichtkontrolle für den gesetzten Hinterschnittanker dar. Der Vorschubweg der Schubhülse entspricht dem Ausmass der Krümmung der Tellerfeder. Die Schubhülse überträgt den axialen Vorschub auf die Spreizhülse, die im gleichen Ausmass auf das konische Kopfteil aufgeschoben wird, wobei ihre Spreizlappen ausgestellt werden und schabend eine Hinterschneidung in der Aufnahmebohrung erzeugen. Der Setzvorgang ist abgeschlossen, sobald der tellerfederartige Flansch flach am Untergrund anliegt. Der tellerfederartige Flansch kann auch Unebenheiten im Untergrund bzw. eine nicht exakt senkrechte Ausrichtung des Hinterschnittdübels aufgrund einer geringfügig schiefen Aufnahmebohrung im Untergrund ausgleichen.

Sehr vorteilhafte Auszugswerte und geringe Spreizdrücke ergeben sich, wenn die im vollständig aufgespreizten Zustand mit der Wandung einer Aufnahmebohrung in Berührung stehenden Flächen der Spreizlappen mit der Ankerstange einen grössten Winkel von etwa 60° bis etwa 80°, vorzugsweise etwa 70°, einschliessen.

Die Verankerung eines selbsthinterschneidenden Hinterschnittankers, der eine Ankerstange, eine Spreizhülse, eine Schubhülse und eine Anpressmutter umfasst, in einer zylindrischen Aufnahembohrung ist sehr einfach und ohne spezielle Hilfswerkzeuge durchführbar. Es sind bloss die folgenden Verfahrensschritte erforderlich: der Anker wird in eine vorbereitete zylindrische Aufnahmebohrung eines Untergrunds eingesetzt; die Ankerstange wird drehfest an einen Drehantrieb, vorzugsweise eines Handgerätes, angekuppelt und danach im Gegenuhrzeigersinn solange gedreht, bis die Anpressmutter den tellerfederartigen Flansch an der Schubhülse flach gegen den Untergrund presst; danach wird der Drehantrieb von der Ankerstange gelöst.

Im folgenden wird die Erfindung unter Bezugnahme auf in den Figuren schematisch dargestellte Ausführungsbeispiele näher erläutert. Es zeigen:
- Fig. 1: ein Ausführungsbeispiel des erfindungsgemässen Hinterschnittankers in einer Aufnahmebohrung im unverankerten Zustand;
- Fig. 2: den Hinterschnittanker aus Fig. 1 im verankerten Zustand;
- Fig. 3: ein Kopfteil des Hinterschnittankers gemäss Fig. 1 und
- Fig. 4: ein Kopfteil eines weiteren Ausführungsbeispiels des erfindungsgemässen Hinterschnittankers.

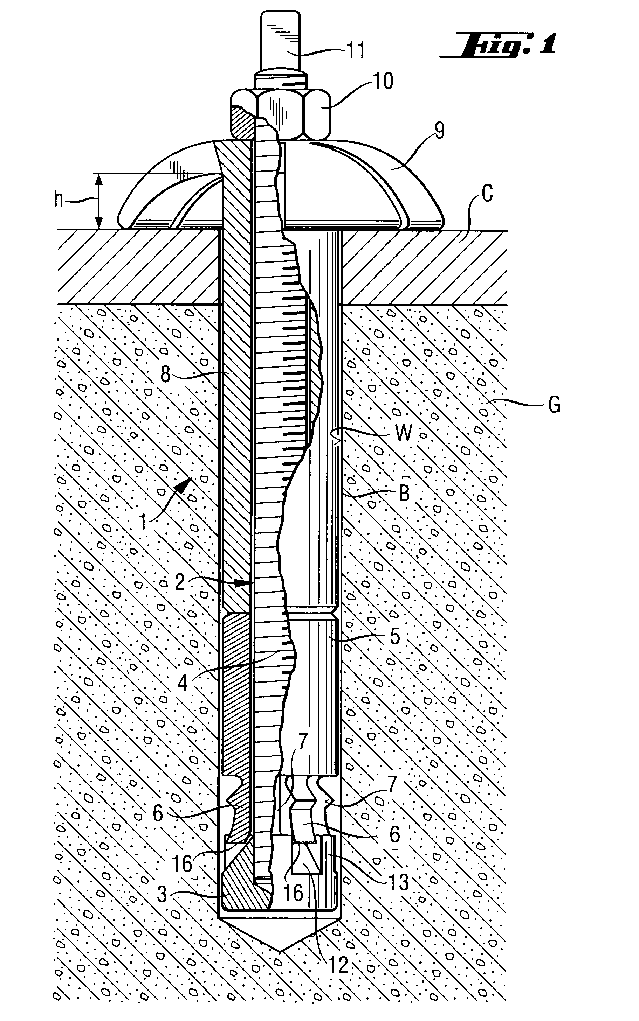

Fig. 1 zeigt in teilweise axial geschnittener Darstellung ein Ausführungsbeispiel des erfindungsgemässen Hinterschnittankers, der gesamthaft mit dem Bezugszeichen 1 versehen ist. Der Hinterschnittanker 1 ist in eine zylindrische Aufnahmebohrung B im Untergrund G eingesetzt und legt ein Bauteil C fest. Er weist eine Ankerstange 2 auf, die beispielsweise, wie dargestellt, entlang ihrer gesamten Längserstreckung mit einem Aussengewinde 4 versehen ist. An ihrem in Setzrichtung vorderen Ende ist die Ankerstange 2 mit einem Kopfteil 3 verbunden, das wenigstens bereichsweise konisch ausgebildet ist. Die Ankerstange 2 ist durch die axiale Durchgangsbohrung einer Spreizhülse 5 geführt, die gegenüber der Ankerstange 2 axial verschiebbar ist. Die Spreizhülse 5 ist mit einer Anzahl von Längsschlitzen 7 versehen, die sich von ihrem vorderen Ende erstrecken und eine Anzahl von Spreizlappen 6 voneinander trennen. Die Spreizlappen 6 weisen an ihren freien Vorderenden Schneiden 16 auf, die vorzugsweise durch gehärtete Bereiche der Spreizlappen gebildet sind. Es können auch Schneideinsätze vorgesehen sein, die in die Oberfläche der Schneidlappen eingesetzt sind und aus dieser hervorragen.

Im Anschluss an die Spreizhülse 5 ist eine Schubhülse 8 auf die Ankerstange 2 geschoben. Die Schubhülse 8 ist in loser Anlage mit dem rückwärtigen Ende der Spreizhülse 5. An ihrem gegenüberliegenden rückwärtigen Ende weist die Schubhülse 8 einen tellerfederartig gekrümmten Flansch 9 auf. Dabei ist die konkave Unterseite des tellerfederartigen Flansches 9 der Oberseite des Bauteils C zugewandt. Der Rand des gewölbten Flansches 9 stützt sich am Bauteil C und damit gegenüber dem Untergrund G ab. Eine Anpressmutter 10 hält die Ankerstange 2 und die aufgeschobene Spreizhülse 5 und die Schubhülse 8 zusammen und verhindert, dass die Ankerstange 2 bis zum Bohrlochgrund in die Aufnahmebohrung B fällt.

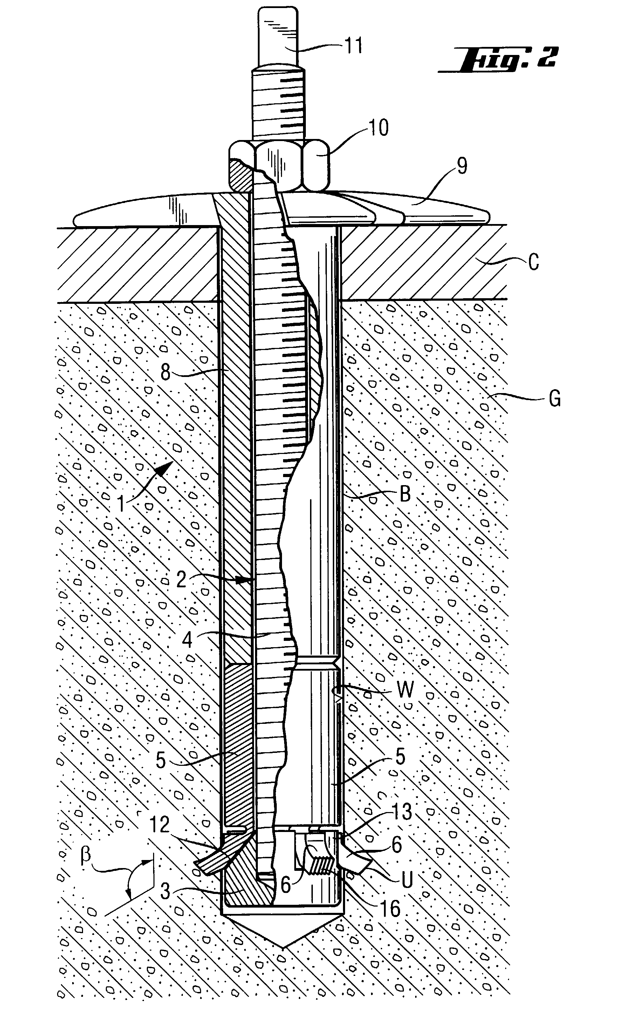

Wie in Fig. 2 angedeutet, erzeugt sich der erfindungsgemässe Hinterschnittanker 1 bei seiner Verankerung selbsttätig eine Hinterschneidung U n der zylindrischen Aufnahmebohrung B. Zu diesem Zweck werden die mit den Schneiden 16 besetzten Spreizlappen 6 ausgestellt und wird die Spreizhülse 5 um ihre Längsachse gedreht. Dies erfolgt durch eine Rotation der Ankerstange 2. Die Ankerstange weist an ihrem rückwärtigen Ende ein Anschlussstück 11 für die Kopplung an ein elektrisch antreibbares Handgerät, beispielsweise ein Bohrgerät, auf. Durch die Rotation der Ankerstange 2 im Gegenuhrzeigersinn wird die Anpressmutter 10 in Setzrichtung auf die Ankerstange 2 aufgeschraubt. Dabei presst sie den tellerfederartigen Flansch 9 nieder, bis dieser am Bauteil C anliegt. Durch das Niederpressen des Flansches wird die Schubhülse 8 entlang der Ankerstange 2 in die Aufnahmebohrung B geschoben. Der axiale Verschiebeweg wird durch die Höhe h der Wölbung des tellerfederartigen Flansches 9 festgelegt. Die Schubhülse 8 überträgt die Verschiebung auf die Spreizhülse 5, wodurch diese im selben Ausmass relativ zur Ankerstange 2 in Richtung des Kopfteils 3 vorgeschoben wird, welches sich konisch zum Bohrlochgrund erweiternde Bereiche 12 aufweist. Die Spreizlappen 6 gleiten entlang der Bereiche 12 und werden nach aussen gegen die Bohrlochwandung W gepresst. Die Rotation der Ankerstange 2 wird während des Setzvorgangs auf die Spreizhülse 5 übertragen. Bei der Rotation der Spreizhülse 5 tragen die Schneiden 16 schabend Material von der Bohrlochwandung ab und erzeugen so die Hinterschneidung U. Der grösster Winkel β, den die in die Hinterschneidung U ausgestellten Spreizlappen 6 mit der Ankerstange 2 einschliessen, beträgt etwa 60° bis etwa 80°, vorzugweise etwa 70°.

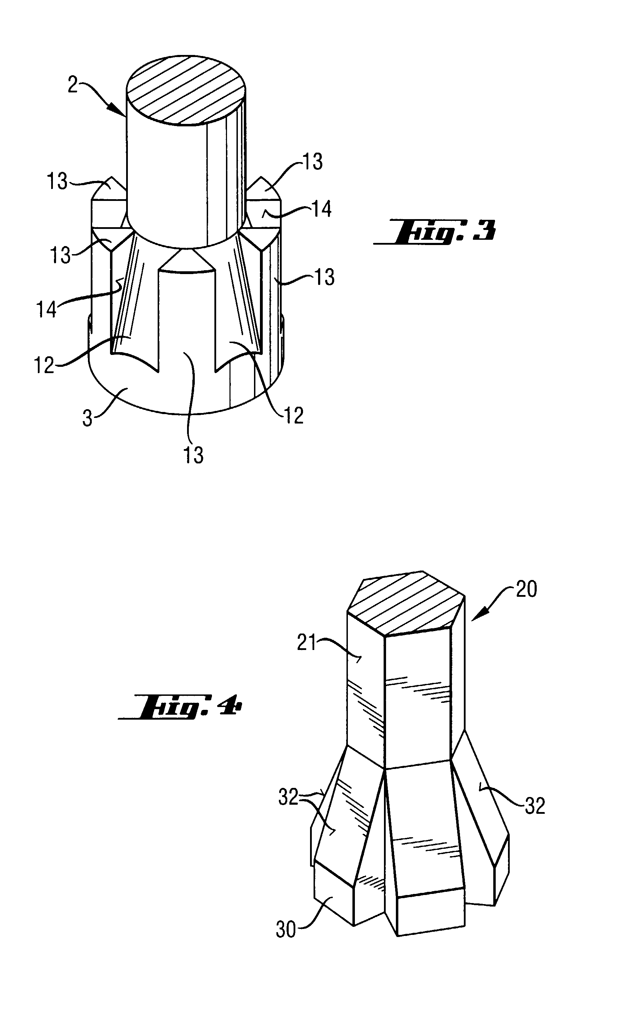

Gemäss Fig. 3 weist das mit der Ankerstange 2 verbundene Kopfteil 3 Drehmitnahmestege 13 auf, welche die konischen Bereiche 12 voneinander trennen. Die Drehmitnahmestege 13 greifen in die Längsschlitze 7 in der Spreizhülse 5 ein, welche die Spreizlappen 6 voneinander trennen (Fig. 2). Während der Vorwärtsbewegung der Spreizhülse 5 dringen die Drehmitnahmestege 13 immer weiter in die Längsschlitze ein und verbessern den Drehschluss. Die Drehmitnahmestege 13 besitzen einen etwa dreieckigen Querschnitt, wobei der Umfang des Kopfteils jeweils die gekrümmte Grundlinie bildet. Dabei erweitern sich die Drehmitnahmestege 13 von der Ankerstange zum Umfang des Kopfteils 3. Die im wesentlichen dreieckige Form der Drehmitnahmestege 13 erleichtert ihr Eindringen in die Längsschlitze 7 zwischen den Spreizlappen 6. Die sich konisch erweiternden Bereiche 12 des Kopfteils 3 sind vorzugsweise als Zylinderflächen ausgebildet, an denen sich die Spreizlappen abstützen können. Die Drehmitnahmestege 13 besitzen axiale Führungsflächen 14 für die Längsseiten der Spreizlappen 6. Dadurch sind die Spreizlappen 6 beim schabenden Erstellen der Hinterschneidung auch seitlich geführt.

Fig. 4 zeigt das Kopfteil 30 einer Variante des erfindungsgemässen Hinterschnittankers, das am setzrichtungseitigen Vorderende einer Ankerstange 20 montiert ist. Die Ankerstange ist im Bereich der nicht dargestellten Spreizhülse n-eckig ausgebildet. Die Drehkopplung der Ankerstange 20 mit der Spreizhülse erfolgt bei dem dargestellten Ausführungsbeispiel durch eine drehschlüssige Verbindung der Ankerstange 20 In der auf die Umfangskontur der Ankerstange 20 kalibrierten Durchgangsbohrung. Im dargestellten Beispiel ist die Ankerstange 20 ein Sechskantbolzen. Es versteht sich, dass die Durchgangsbohrung der nicht dargestellten Spreizhülse gleichfalls einen sechseckigen Querschnitt aufweist. Dadurch ist bei der Rotation der Ankerstange 20 eine formschlüssige Drehkopplung mit der Spreizhülse gegeben. Das Ausstellen der Spreizlappen erfolgt wiederum durch axiales Verschieben der Spreizhülse gegenüber der Ankerstange. Dazu ist das Kopfteil 30 als Konus ausgebildet, der sich in Setzrichtung erweitert. Entsprechend den Seitenflächen 21 der mehrkantigen Ankerstange 30 sind am Kopfteil 30 Keilflächen 32 vorgesehen, an denen sich die Spreizlappen der Spreizhülse abstützen können. Die Keilflächen 32 sind dabei in axialer Verlängerung der Seitenflächen 21 der Ankerstange angeordnet. Daraus ergibt sich, dass die Längsschlitze der nicht näher dargestellten Spreizhülse mit den Kanten der Ankerstange 20 zusammenfallen. Das axiale Verschieben der Spreizhülse erfolgt wiederum über eine Schubhülse mit einem tellerfederartig gewölbten Flansch. Der Setzvorgang des erfindungsgemässen Hinterschnittankers ist beendet, wenn der tellerfederartige Flansch flach an dem zu befestigenden Bauteil anliegt. Auf diese Weise bildet der tellerfederartige Flansch zugleich eine Sichtkontrolle für die ordnungsgemässe Verankerung.

## Patentansprüche

1. Hinterschnittanker mit einer Ankerstange (2, 20), die an ihrem in Setzrichtung vorderen Ende ein sich zumindest bereichsweise in Setzrichtung konisch erweiterndes Kopfteil (3, 30) aufweist und durch die axiale Durchgangsbohrung einer gegenüber der Ankerstange (2, 20) axial verschiebbaren Spreizhülse (5) geführt ist, die mit einer Anzahl sich von ihrem vorderen Ende erstreckenden axialen Längsschlitzen (7) versehen ist, durch die wenigstens zwei einander gegenüberliegende, ausstellbare Spreizlappen (6) gebildet sind, die an ihren freien Vorderenden Schneiden (16) aufweisen, **dadurch gekennzeichnet**, dass sich der Hinterschnittanker (1) gegenüber der Oberfläche des Untergrunds (G) abstützt und dass Mittel zur Drehmitnahme vorgesehen sind, mit denen eine während des Setzvorgangs der Ankerstange (2, 20) erteilte axiale Rotation auf die Spreizhülse (5) übertragbar ist.

2. Vorrichtung nach Anspruch 1, dadurch gekennzeichnet, dass die Mittel zur Drehmitnahme radiale Drehmitnahmestege (13) sind, die im Verbindungsbereich des Kopfteils (3) mit der Ankerstange (2) vom Kopfteil (3) abragen und drehschlüssig in die axialen Längsschlitze (7) der Spreizhülse (5) eingreifen.

3. Vorrichtung nach Anspruch 2, dadurch gekennzeichnet, dass die Kontur der Axialprojektion der Drehmitnahmestege (13) im wesentlichen der Kontur der Axialprojektion der Längsschlitze (7) entspricht.

4. Vorrichtung nach Anspruch 3, dadurch gekennzeichnet, dass die Drehmitnahmestege (13) vom Umfang der Ankerstange (2) zum Umfang des Kopfteils (3) keilförmig verbreitert ausgebildet sind.

5. Vorrichtung nach Anspruch 4, dadurch gekennzeichnet, dass die Bereiche (12) des Kopfteils zwischen zwei Drehmitnahmestegen (13) Zylinderflächenabschnitte sind, auf welche die Spreizhülse (5) unter Aufspreizen ihrer Spreizlappen (6) aufschiebbar ist.

6. Vorrichtung nach Anspruch 1, dadurch gekennzeichnet, dass die Mittel zur Drehmitnahme in einem Drehschluss der Ankerstange (20) und der Spreizhülse bestehen, wobei die Ankerstange (20) wenigstens in ihrem vorderen Bereich einen von der Kreisform abweichenden Querschnitt aufweist und die Durchgangsbohrung der Spreizhülse auf den Querschnitt der Ankerstange (20) kalibriert ist.

7. Vorrichtung nach Anspruch 6, dadurch gekennzeichnet, dass die Ankerstange (20) die Form eine n-Ecks aufweist und das Kopfteil (30) eine Anzahl von Keilflächen (32) aufweist, die in Setzrichtung von der Achse der Ankerstange (20) weg geneigt verlaufen, wobei die Anzahl der Keilflächen (32) der Anzahl der Spreizlappen der Spreizhülse entspricht.

8. Vorrichtung nach einem der vorangehenden Ansprüche, dadurch gekennzeichnet, dass im Anschluss an die Spreizhülse (5) eine Schubhülse (8) auf die Ankerstange (2, 20) aufgeschoben ist, welche sich zum rückwärtigen Ende der Ankerstange (2, 20) erstreckt, wobei die Schubhülse (8) axial gegenüber der Ankerstange (2, 20) verschiebbar ist und ein vorderes Ende aufweist, das in loser Anlage mit dem rückwärtigen Ende der Spreizhülse (5) ist, und an ihrem rückwärtigen Ende einen tellerfederartig gewölbten Flansch (9) aufweist, dessen Wölbung derart verläuft, dass die konkave Seite des Flansches (9) dem vorderen Ende der Schubhülse (8) zugewandt ist und die gegenüberliegende Seite des Flansches (9) in Anlage mit einer Anpressmutter (10) steht, die auf ein, vorzugsweise rechtsdrehendes, Aussengewinde (4) am rückwärtigen Ende der Ankerstange (2, 20) aufschraubbar ist.

9. Vorrichtung nach einem der vorangehenden Ansprüche, dadurch gekennzeichnet, dass die im vollständig aufgespreizten Zustand mit der Wandung einer Aufnahmebohrung (B) in Berührung stehenden Flächen der Spreizlappen (6) mit der Ankerstange (2, 20) einen grössten Winkel (β) von etwa 60° bis etwa 80°, vorzugsweise etwa 70°, einschliessen.

10. Verfahren zum Verankern eines Hinterschnittankers, der eine Ankerstange (2, 20), eine Spreizhülse (5), eine Schubhülse (8) mit tellerfederartigem Flansch (9) und eine Anpressmutter (10) umfasst, dadurch gekennzeichnet, dass der Hinterschnittanker (1) in eine vorbereitete zylindrische Aufnahmebohrung (B) eines Untergrunds (G) eingesetzt wird, die Ankerstange (2, 20) drehfest an einen Drehantrieb, vorzugsweise eines Handgerätes, angekuppelt wird und im Gegenuhrzeigersinn solange gedreht wird, bis die Anpressmutter (10) den tellerfederartigen Flansch (9) an der Schubhülse (8) flach gegen den Untergrund (G) bzw. ein Bauteil (C) presst, und danach der Drehantrieb von der Ankerstange (2, 20) gelöst wird.

## Claims

1. Undercutting anchor comprising an anchor rod (2, 20) having at its front end, as seen in the setting direction, a head (3, 30), which at least sectionally expands conically in the setting direction and which is passed through the axial troughbore of an expansion sleeve (5), which is axially displaceable relative to the anchor rod (2, 20), which is provided with a number of axial longitudinal slots (7) which extend from its front end and through which at least two oppositely positioned pivotal expansion tabs (6) are formed which have cutters (16) at their free front ends, **characterised in that** the undercutting anchor (1) supports itself against the surface of the bottom (G), and means are provided for rotary pickup by means of which an axial rotation to which an anchor rod (2, 20) is subjected during a setting process is transferable to the expansion sleeve (5).

2. Device according to Claim 1, **characterised in that** the rotary pickup means are radial rotary pickup webs (13) which project in the joining area of the head (3) and the anchor rod (2) from the head (3) and non-rotationally engage the axial longitudinal slots (7) of the expansion sleeve (5).

3. Device according to Claim 2, **characterised in that** the contour of the axial projection of the rotary pickup webs (13) essentially corresponds with the contour of the axial projection of the longitudinal slots (7).

4. Device according to Claim 3, **characterised in that** the rotary pickup webs (13) are designed to be wedgelike broadening between the circumference of the anchor rod (2) and the circumference of the head (3).

5. Device according to Claim 4, **characterised in that** the areas (12) of the head between two rotary pickup webs (13) are cylinder surface sections onto which the expansion sleeve (5) is pushed by expanding their expansion tabs (6).

6. Device according to Claim 1, **characterised in that** the means for rotary pickup lie in a rotary lock of the anchor rod (20) and the expansion sleeve, and the anchor rod (20) comprises at least in its front area a cross-section which deviates from the circular shape, and the throughbore of the expansion sleeve is calibrated to the cross-section of the anchor rod (20).

7. Device according to Claim 6, **characterised in that** the anchor bar (20) has the form of an n-corner, and the head (30) comprises a number of wedge surfaces (32) which extend, as seen in the setting direction, away from the axis of the anchor rod (20) at a slant, and the number of wedge surfaces (32) corresponds with the number of expansion tabs of the expansion sleeve.

8. Device according to one of the above claims, **characterised in that** following the expansion sleeve (5), a push sleeve (8) is pushed onto the anchor rod (2, 20), which extends toward the rear end of the anchor rod (2, 20), and the push sleeve (8) is axially displaceable relative to the anchor rod (2, 20) and comprises a front end which loosely abuts the rear end of the expansion sleeve (5), and it comprises at its rear end a cupspringshaped flange (9) the curvature of which extends in such a manner that the concave side of the flange (9) is facing toward the front end of the push sleeve (8) and the opposite side of the flange (9) abuts a clamping nut (10) which is screwed onto a preferably righthand outside thread (4) on the rear end of the anchor rod (2, 20).

9. Device according to one of the above claims, **characterised in that** the surfaces of the expansion tabs (6), which in a fully expanded state make contact with the wall of a receiving bore (B), include with the anchor rod (2, 20) a larger angle (β) between approximately 60° and approximately 80°, preferably approximately 70°.

10. Process of anchoring an undercutting anchor which includes an anchor rod (2, 20), an expansion sleeve (5), a push sleeve (8) with cupspringshaped flange (9) and a clamping nut (10), **characterised in that** the undercutting anchor (1) is inserted into a prepared cylindrical receiving bore (B) of a base (G), the anchor rod (2, 20) is non-rotationally coupled to a rotary drive, preferably a hand tool, and turned counterclockwise until the clamping nut (10) presses the cupspringshaped flange (9) on the push sleeve (8) flat against the base (G) or an assembly component (C), whereafter the rotary drive is detached from the anchor rod (2, 20).

## Revendications

1. Dispositif d'ancrage à dépouille comprenant une tige d'ancrage (2, 20) qui comporte, à son extrémité située à l'avant par rapport au sens d'enfoncement, une partie de tête (3, 30) s'élargissant au moins par endroits sous forme conique dans le sens d'enfoncement et qui est guidée à travers le trou axial débouchant d'un manchon expansible (5), lequel est apte à se déplacer axialement par rapport à la tige d'ancrage (2, 20) et est pourvu d'une pluralité de fentes longitudinales axiales (7) qui s'étendent à partir de son extrémité avant et à travers lesquelles sont formées au moins deux pattes expansibles en projection (6) qui sont situées à l'opposé l'une de l'autre et qui comportent des taillants (16) à leurs extrémités avant libres, caractérisé en ce que le dispositif d'ancrage à dépouille (1) prend appui sur la surface du sol (G), et en ce qu'il est prévu des moyens d'entraînement en rotation permettant de transmettre au manchon expansible (5) une rotation axiale imprimée durant l'opération d'enfoncement de la tige d'ancrage (2, 20).

2. Dispositif selon la revendication 1, caractérisé en ce que les moyens d'entraînement en rotation sont des nervures radiales d'entraînement en rotation (13) qui, dans la zone de liaison de la partie de tête (3) avec la tige d'ancrage (2), dépassent de la partie de tête (3) et pénètrent dans les fentes longitudinales axiales (7) du manchon expansible (5) en formant une liaison en rotation.

3. Dispositif selon la revendication 2, caractérisé en ce que le contour de la projection axiale des nervures d'entraînement en rotation (13) correspond sensiblement au contour de la projection axiale des fentes longitudinales (7).

4. Dispositif selon la revendication 3, caractérisé en ce que les nervures d'entraînement en rotation (13) sont conformées pour s'élargir en forme de coins de la périphérie de la tige d'ancrage (2) à la périphérie de la partie de tête (3).

5. Dispositif selon la revendication 4, caractérisé en ce que les zones (12) de la partie de tête comprises entre deux nervures d'entraînement en rotation (13) sont des portions de surfaces cylindriques sur lesquelles le manchon expansible (5) peut monter pour déployer ses pattes expansibles (6).

6. Dispositif selon la revendication 1, caractérisé en ce que les moyens d'entraînement en rotation sont constitués par une liaison en rotation de la tige d'ancrage (20) et du manchon expansible, la tige d'ancrage (20) présentant au moins dans sa zone avant une section transversale autre que circulaire, et le trou débouchant du manchon expansible étant calibré en fonction de la section transversale de la tige d'ancrage (20) .

7. Dispositif selon la revendication 6, caractérisé en ce que la tige d'ancrage (20) présente la forme d'un polygone, et la partie de tête (30) comporte une pluralité de surfaces inclinées (32) qui s'étendent en biais dans le sens d'enfoncement à partir de l'axe de la tige d'ancrage (20), le nombre de surfaces inclinées (32) correspondant au nombre de pattes expansibles du manchon expansible.

8. Dispositif selon une des revendications précédentes, caractérisé en ce qu'à la suite du manchon expansible (5) est emmanché sur la tige d'ancrage (2, 20) un manchon de poussée (8) qui s'étend vers l'extrémité arrière de la tige d'ancrage (2, 20), lequel manchon de poussée (8) est apte à se déplacer axialement par rapport à la tige d'ancrage (2, 20) et comporte une extrémité avant en contact libre avec l'extrémité arrière du manchon expansible (5) et, à son extrémité arrière, un collet bombé en forme de ressort-diaphragme (9) dont le bombé s'étend de telle façon que la face concave du collet (9) soit orientée vers l'extrémité avant du manchon de poussée (8) et que la face opposée du collet (9) soit en contact avec un écrou de pression (10) qui peut être vissé sur un filetage extérieur (4), de préférence tournant à droite, réalisé sur l'extrémité arrière de la tige d'ancrage (2, 20).

9. Dispositif selon une des revendications précédentes, caractérisé en ce que les surfaces des pattes expansibles (6) en contact avec la paroi d'un trou récepteur (B) en position complètement déployée forment, avec la tige d'ancrage (2, 20), un angle maximal (β) d'environ 60° à environ 80°, de préférence d'environ 70°.

10. Procédé pour ancrer un dispositif d'ancrage à dépouille comprenant une tige d'ancrage (2, 20), un manchon expansible (5), un manchon de poussée (8) à collet en forme de ressort-diaphragme (9) et un écrou de pression (10), caractérisé en ce que le dispositif d'ancrage à dépouille (1) est inséré dans un trou récepteur cylindrique préparé (B) du support (G), la tige d'ancrage (2, 20) est solidarisée en rotation à un moyen d'entraînement en rotation, de préférence d'un appareil portatif, et est tournée en sens antihoraire jusqu'à ce que l'écrou de pression (10) plaque le collet en forme de ressort-diaphragme (9) monté sur le manchon de poussée (8) contre le sol (G) ou contre un élément structurel (C), après quoi le moyen d'entraînement en rotation est désolidarisé de la tige d'ancrage (2, 20).
